Europäisches Patentamt

European Patent Office

Office européen des brevets

(11) Veröffentlichungsnummer: **0 076 333**
**A1**

## (12) EUROPÄISCHE PATENTANMELDUNG

(21) Anmeldenummer: 81107309.7

(22) Anmeldetag: 07.10.81

(51) Int. Cl.³: **F 24 H 9/12**
**F 24 H 1/20, F 24 D 11/02**

(43) Veröffentlichungstag der Anmeldung:
**13.04.83 Patentblatt 83/15**

(84) Benannte Vertragsstaaten:
**AT BE CH DE FR GB IT LI LU NL SE**

(71) Anmelder: **Schwarz, Karl**
**Fabrikstrasse 60**
**D-8999 Weiler/Allgäu(DE)**

(72) Erfinder: **Schwarz, Karl**
**Fabrikstrasse 60**
**D-8999 Weiler/Allgäu(DE)**

(54) **Wärmespeicher für flüssige Wärmeträger zur optimalen Energienutzung von Niedertemperaturwärmequellen wie Solaranlagen und Wärmepumpen.**

(57) Bei diesem Wärmespeicher werden unter weitgehender Vermeidung von Temperaturdifferenzen bedingenden Wärmetauschern die Speicherein- bzw. Speicherausströmöffnungen (1-7) entsprechend einer natürlichen Temperaturschichtung angeordnet oben warm unten kalt und die durch die Ein- bzw. Ausströmgeschwindigkeit des Wärmeträgers bedingten Turbulenzen in spezielle Turbulenzräume (Turbulenzrohr) verlegt, von wo aus der Wärmeträger mit möglichst kleiner Geschwindigkeit in das eigentliche Speichervolumen weitgehend turbulenzfrei einströmt.

FIG 1

EP 0 076 333 A1

Wärmespeicher für flüssige Wärmeträger zur optimalen Energienutzung von Niedertemperaturwärmequellen wie Solaranlagen und
Wärmepumpen

Bei der Wärmeerzeugung aus Brennstoffen oder elektrischer Energie ist es unwesentlich, ob mit diesen Energien eine Flüssigkeitsmenge von 10 auf 20°C oder von 70 auf 80°C erwärmt wird.
Der Nutzwirkungsgrad ist praktisch in beiden Fällen gleich. Bei
der Wärmegewinnung aus Niedertemperaturwärmequellen wie Solarkollektoren oder Wärmepumpen hat man die mit steigender Temperatur abnehmende Wirkungsgrad- bzw. Leistungsziffercharakteristik
zu berücksichtigen, wobei der Wirkungsgrad einer Solaranlage
unter konstanten Bedingungen z.B. bei Einspeisung auf ein Temperaturniveau bei 10°C noch 90% betragen kann und bei 70°C bereits Null sein kann.

Die niedrigste Temperatur in einem Speichersystem wird normalerweise durch die Einlauftemperatur von kaltem Frischwasser oder
durch die Rücklauftemperatur von Verbraucherkreisläufen vorgegeben. Voraussetzung für ein optimales System ist daher, daß die
Energiequelle möglichst intensiv mit dem niedrigsten Temperaturniveau der Verbraucherkreise Wärme tauscht und daß die Vermischung einer einmal erreichten Temperaturstufe mit einer niedrigeren Temperaturstufe vermieden wird. Dies läßt sich durch mehrstufige Speicheranordnungen mit entsprechend aufwendiger äußerer
Steuerung und Installation erreichen.

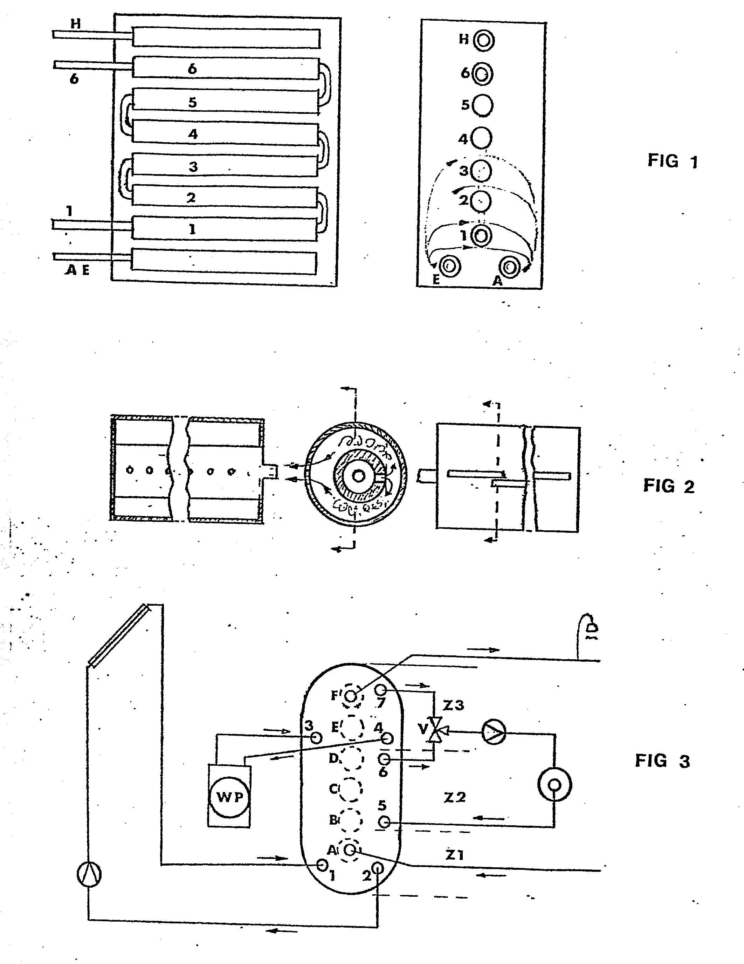

Erfindungsgemäß (Fig. 1) wird dieses Ziel dadurch erreicht, daß
der Energiespender z.B. die Solaranlage in den Speicher an niedriger Stelle möglichst turbulenzfrei einspeist (Fig. 1 AE) und
daß im Speicher durch die unterschiedliche Dichte des Wärmeträgers bei verschiedener Temperatur durch Schwerkraftkreislauf
ein kurzfristiger Temperaturausgleich nur in der Weise erfolgt,
daß sich eine höhere Temperatur im unteren Speicherteil sehr
schnell nach oben ausgleicht, während eine höhere Temperatur
im oberen Speicherteil durch entsprechende Temperaturschichtung
erhalten bleibt und sich kurzfristig nicht nach unten ausgleicht.

Eine Wärmeenergieentnahme aus diesem Speicher kann nun ebenfalls
so erfolgen, daß der kühlere Rückfluß in tiefe Speicherzonen
erfolgt, während die Energieentnahme aus hochliegender Speicherzone erfolgt (Fig. 1 EH). Eine noch günstigere Energieentnahme
ergibt sich z.B. für Heizzwecke dadurch, daß der Rücklauf im
Speicher tief angeordnet ist, daß in etwas höherer Lage ein Auslauf erfolgt, in hoher Lage ein zweiter und daß über ein Mischventil, je nach Energiebedarf, zuerst aus dem unteren Entnahmerohr abgeführt wird und nur bei unzureichender Energie im unteren Teil des Speichers die höhere Speicherzone mit zur Energielieferung beiträgt. Dadurch wird erreicht, daß der Speicher
zuerst in seinem unteren Bereich abgekühlt wird, während der
obere Speicherteil sein einmal erreichtes Temperaturniveau nur
dann verliert, wenn der untere Speicherteil den Energiebedarf
nicht mehr ausreichend decken kann. Dadurch nimmt der untere
Speicherteil jeweils die niedrigstmögliche Temperatur an und erlaubt der Energiequelle, auf niedrigstmöglicher Temperatur einzuspeisen, während ein bereits im oberen Speicherteil erreichter
Energieinhalt solange erhalten bleibt, bis der untere Speicherteil
nicht mehr genügend Energie bereitstellen kann.

0076333

Weiter kann nun auch im oberen Speicherteil eine Hilfsenergie zur Nachheizung eingespeist werden. Solange der Energieinhalt des unteren Speicherteiles ausreicht, wird die Hilfsenergie nicht in Anspruch genommen. Erst wenn der obere Speicherteil mit zur Energielieferung beiträgt, wird auch die Hilfsenergie in Anspruch genommen, falls der obere Speicherteil nicht durch frühere Erwärmung von unten soviel Wärmeenergie enthält, daß die Hilfsenergie noch gar nicht aufgeschaltet wird.

Ein zur Erzeugung von Warmwasser aus Frischwasser benötigter Innenboiler wird ebenfalls in mehrere hintereinander geschaltete Boilerstufen (Fig. 1 1-6) aufgeteilt, die im Speicher in der Höhe versetzt angeordnet sind. Das kalte Frischwasser strömt in die unterste Boilerstufe (Fig.1 1) ein und geht danach stufenweis höhersteigend in die oberen Speicherregionen und tritt aus der obersten Speicherstufe (Fig.1 6) als Warmwasser aus. Die unteren Speicherstufen entnehmen nun ebenfalls zuerst aus dem nicht nachbeheizten Speicherteil. In den oberen Boilerstufen wird nur die Wärme übernommen, die von den unteren nicht bereitgestellt wurde. Solange also in dem unteren Speicherteil die Wärme ausreichend ist, wird der obere Speicherteil auch bei der Brauchwasserbereitung nicht in Anspruch genommen.

(Um für das Weitere die Unterscheidung zwischen Ein- und Auslassrohren zu vermeiden, soll vereinbart sein, daß eine Speicherausströmung als negative Einströmung betrachtet wird).

Wenn der Wärmeträger in den Rohrleitungen z.B. mit 1 m/s transportiert wird, während er im Speicher nur noch mit wenigen cm/s fließt, führt ein direktes Einströmen des Wärmeträgers zu großräumigen Turbulenzen, die den Speicherinhalt ständig durchmischen. Für einen Speicher, wie oben beschrieben, ist es also wichtig, daß diese nicht zu vermeidenden Bewegungsenergiedifferenzen keine Turbulenzen erzeugen, die den Speicherinhalt durchmischen. Dies wird erfindungsgemäß dadurch erreicht, daß die Turbulenzen in einen Zusatzraum verlagert werden, aus dem die Flüssigkeit in den eigentlichen Speicherraum mit kleiner Geschwindigkeit eindringt.

Eine besonders einfache und effektive Anordnung zur Strömungsenergieumsetzung und großflächigem Einströmen des Wärmeträgers in den Speicher ist erfindungsgemäß die Anordnung von 2 ineinandersteckenden Rohren (Fig. 2), wobei in das innenliegende Rohr die Flüssigkeit mit großer Geschwindigkeit einströmt und durch entsprechende Perforation in den Zwischenraum zwischen innerem und äußerem Rohr übertritt. In diesem Zwischenraum bilden sich die Turbulenzen, die die Bewegungsenergie in Wärmeenergie umsetzen. Durch entsprechend große Ausgangsöffnungen im äußeren Rohr tritt nun der Wärmeträger mit entsprechend kleiner Geschwindigkeit in den eigentlichen Speicherraum ein. Die Verteilung der Perforation auf dem Innenrohr und die Öffnungen auf dem Außenrohr werden erfindungsgemäß zweckmäßig so dimensioniert, daß im Normalbetrieb die Ausströmung möglichst gleichmäßig über die Rohrlänge verteilt erfolgt, wobei die Ausströmung radial zweckmäßig nur in einer Richtung erfolgt. Kleine Restturbulenzen am Austritt des Außenrohres werden durch entsprechende Gestaltung der Austrittsöffnungen auf kleinste Raumgebiete konzentriert. Erfindungsgemäß besonders günstig wird eine Anordnung der Ein- bzw. Ausströmrohre für die Energieeinspeisung so vorgenommen, daß das
einströmende Medium z.B. nach rechts außen geführt wird,
während das ausströmende Medium von links außen abgezogen
wird, so daß sich also ein zonenartiger Strömungskreislauf
über den gesamten Querschnitt des Speichers ausbilden kann,
wobei je nach Verhältnis von Speichertemperatur und Einfülltemperatur sich dieser Kreislauf durch Dichteunterschiede in
höhere oder niedrigere Speicherzonen verlagert.

An einem einfachen Beispiel (Fig. 3) sei nun die Wirkungsweise eines derartigen Speichers näher erläutert. Die Energie
wird einmal aus einer Solaranlage zum andern zur Nachheizung
über Wärmepumpe angeliefert. Verbraucher sei einmal eine Niedertemperatur-Fußbodenheizung zum andern die Warmwasserversorgung des Gebäudes. Die Solaranlage speist turbulenzfrei an 1
ein, der Rücklauf erfolgt turbulenzfrei an 2, der Heizungsrücklauf erfolgt turbulenzfrei an 5, die Entnahme je nach Stellung
des Ventils V turbulenzfrei an 6 oder an 7. Die Wärmepumpe
speist turbulenzfrei über 3 und 4 ein. Das Kaltwasser strömt in
die Boilerstufe A ein und durchläuft danach die Stufen B, C,
D, E, F und strömt von dort als Warmwasser aus. Im Speicher
bilden sich nun die 3 angedeuteten Temperaturzonen aus Z 1,
Z 2, Z 3. Die Zone Z 1 kann als niedrigste Speichertemperatur
die Temperatur des einströmenden Kaltwassers annehmen. Die Zone Z 2 hat als niedrigste Temperatur die Rücklauftemperatur der
Heizung. Die Zone Z 3 wird in ihrer Temperatur minimal fixiert
durch die Wärmepumpenregelung.

Die Solaranlage füllt den gesamten Speicher, die Wärmepumpe
nur die Zone Z 3. Für die Heizung wird bei ausreichendem Energieinhalt des Speichers nur aus der Zone Z 2 Wärmeenergie entnommen. Reicht diese Energie nicht aus, wird aus Zone Z 3 zugemischt und damit die durch die Wärmepumpe eingespeiste Energie mit zur Heizung herangezogen. Ein Warmwasserverbrauch führt
zuerst zur Füllung der Speicher der Boilerstufe A mit Kaltwasser,
d.h. der untere Speicherteil wird zuerst abgekühlt, während sich
das Boilerinnere erwärmt. Es wird also Wärmeenergie zuerst aus
Zone 1, dann aus 2 und erst zuletzt aus 3 entnommen. Haben sämtliche Boilerstufen einen Gesamtinhalt von ca. 200 l , so
wird durch 100 l Wasserentnahme für ein Vollbad nur Boilerstufe A, B, C mit Kaltwasser gefüllt. Diese erwärmen sich dann
entsprechend dem Wärmeinhalt im unteren Speicherteil. Erst bei
weiterer Brauchwasserentnahme wird das im unteren Speicherteil
gegebenenfalls noch nicht ausreichend erwärmte Wasser im oberen
Speicherteil nacherwärmt.

Zweckmäßig läßt sich dieser Speicher in der Form der bereits
üblichen, leicht transportierbaren Heizölbatteriespeicher herstellen, wobei die Füll- und Entleerrohre waagrecht in Längsrichtung des Speichers angeordnet sind. Auch die innenliegenden
Boilerstufen lassen sich als waagrecht liegende hintereinander
geschaltete Rohre mit größerem Durchmesser in brauchwassergeeignetem Werkstoff z.B. Edelstahl realisieren. Auch ein am Ort geschweißter Speicher, in den nur die vorgefertigten Füll-
und Entleerrohre und gegebenenfalls die mehrstufige Innenboileranordnung eingesetzt wird, ist zweckmäßig.

Für größere Anlagen können auch mehrere Speicher in Kaskade zusammengeschaltet sein z.B. eine aus 3 Speichern gebildete Kaskade, die von einer Solaranlage und einer gasbetriebenen Wärmepumpe mit Abwärmenutzung gespeist wird, wobei die Solaranlage
alle Speicher 1, 2 und 3, die Wärmepumpe nur Speicher 2 und
die Abwärme Speicher 3 füllt.

Patentansprüche:

1.) Turbulenzarmer Wärmespeicher für flüssige Wärmeträger zur optimalen Energienutzung von Niedertemperaturwärmequellen wie Solaranlagen und Wärmepumpen dadurch gekennzeichnet, daß die durch die Geschwindigkeitsänderungen bedingten großräumigen Turbulenzen im Speicherinnern dadurch vermieden werden, daß der mit hoher Geschwindigkeit einströmende Wärmeträger erst in eine Kammer geführt wird, aus der die Strömung möglichst gleichmäßig verteilt durch entsprechend große Austrittsöffnungen mit kleiner Geschwindigkeit möglichst turbulenzfrei in den eigentlichen Speicherraum geführt wird, so daß Turbulenzen innerhalb dieser Kammer die umzusetzende Bewegungsenergie verzehren. Kleine Restturbulenzen am Austritt der Kammer werden durch entsprechende Gestaltung der Austrittsöffnungen auf kleinste Raumgebiete konzentriert. Umgekehrt gilt das gleiche für die ausströmende Flüssigkeit.

2.) Turbulenzarmer Speicher nach Anspruch 1) dadurch gekennzeichnet, daß diese Bewegungsenergie verzehrende Kammer dadurch gebildet wird, daß der Zwischenraum zwischen 2 ineinandersteckenden Rohren diese Kammer bildet, wobei im Innenrohr die Flüssigkeit mit großer Geschwindigkeit einströmt und durch eine entsprechend dimensionierte Perforation in den Zwischenraum zwischen beiden Rohren gelangt und daß die Flüssigkeit aus diesem Zwischenraum durch entsprechend größere Austrittsöffnungen möglichst gleichmäßig mit kleiner Geschwindigkeit in den eigentlichen Speicherraum austritt bzw. bei der aus dem Speicher strömenden Flüssigkeit entsprechend umgekehrt (Fig. 2).

3.) Turbulenzarmer Speicher nach Anspruch 1 und 2 dadurch gekennzeichnet, daß die Perforation des Innenraumes und die Austrittsöffnungen in den Speicherraum nach Anspruch 2 so ausgeführt sind, daß im Betrieb je Längeneinheit des Rohres ungefähr gleich große Flüssigkeitsmengen in den Speicher einströmen.

4.) Turbulenzarmer Wärmespeicher nach Anspruch 1 bis 3 dadurch gekennzeichnet, daß die Ein- bzw. Ausströmrohre für die Energieeinspeisung so angeordnet sind (Fig. 1), daß die Richtung des einströmenden Mediums z.B. nach rechts außen geführt ist, während das ausströmende Medium links außen abgezogen wird, sodaß sich also ein zonenartiger Strömungskreislauf möglichst über den gesamten ebenen Querschnitt des Speichers ausbildet, wobei je nach Verhältnis von Speichertemperatur und Einfülltemperatur sich dieser Kreislauf durch Dichteunterschiede in höhere oder niedrigere Speicherzonen verlagert.

5.) Turbulenzarmer Speicher nach Anspruch 1-4 dadurch gekennzeichnet, daß sowohl das Ein- und Ausströmungsrohr für
die Energieeinspeisung auf niedrigster Temperaturstufe
im Speicher unten angeordnet sind und damit den gesamten
Speicherraum aufheizen, daß Energiequellen zur Nachheizung entsprechend höher angeordnet sind, so daß sie nur
die entsprechend höher liegenden Speicherteile nachheizen und daß die Energieentnahmestellen ebenfalls in der
Höhe so angeordnet sind, daß ein auf niedriger Temperatur liegender Rücklauf z.B. so tief angesetzt ist, daß
er zusammen mit einem Auslauf zuerst aus der unteren nicht
nachbeheizten Zone Energie entnimmt und erst danach aus
dem nachbeheizten oberen Speicherteil, wobei der Auslauf
für diese Energieentnahme entsprechend hoch angeordnet ist.

6.) Turbulenzarmer Speicher nach Anspruch 1-5 dadurch gekennzeichnet, daß der zur Erzeugung von warmem Brauchwasser
aus Frischwasser erforderliche Innenboiler aus mehreren
kleinen hintereinandergeschalteten Boilerstufen besteht,
die in der Höhe versetzt sind und daß das kalte Frischwasser in die niedrigst liegende Boilerstufe einströmt
und stufenweise in die höheren Stufen strömt und aus der
obenliegenden Boilerstufe entnommen wird.

7.) Turbulenzarmer Speicher nach Anspruch 1-6 dadurch gekennzeichnet, daß die Innenboilerstufen aus hintereinander
geschalteten Rohrstücken größeren Durchmessers bestehen.

8.) Turbulenzarmer Speicher nach Anspruch 1-7 dadurch gekennzeichnet, daß die Form und Außenmaße ungefähr den
bisher üblichen, leicht transportablen Batterieheizöltanks mit 1000 bis 3000 ltr. Inhalt entsprechen, also
die maximalen Außenmaße von ca. 2,5 m Länge, 0,9 m Breite
und 1,8 m Höhe besitzen und daß sich gegebenenfalls vorhandene Innenboiler zur Brauchwassererzeugung aus mindestens 4 Stufen mit einem Gesamtinnenvolumen von mindestens
50 l    zusammensetzen.

9.) Turbulenzarmer Speicher nach Anspruch 1-8 dadurch gekennzeichnet, daß die gesamten Füll- und Leerarmaturen
an einer Seitenfläche des Speichers angeordnet sind.

10.) Turbulenzarmer Speicher nach Anspruch 1-9 dadurch gekennzeichnet, daß die Armaturen demontierbar in die
Seitenfläche eingelassen sind.

FIG 1

FIG 2

FIG 3

0076333

-1/1-

Europäisches
Patentamt

## EUROPÄISCHER RECHERCHENBERICHT

| Kategorie | EINSCHLÄGIGE DOKUMENTE Kennzeichnung des Dokuments mit Angabe, soweit erforderlich, der maßgeblichen Teile | betrifft Anspruch |
|---|---|---|
| X | AU - B - 501 995 (HART & CO.) * das ganze Dokument * | 1,2,3 |
| A | FR - A - 2 398 267 (CHOULEUR) * das ganze Dokument * | 5,6 |
| A | FR - A - 2 095 739 (WITTE HAUS-TECHNIK) * Figur 3 * | 8-10 |
| X | BE - A - 567 297 (MEUE) * Figuren * | 1,2 |

**KLASSIFIKATION DER ANMELDUNG (Int. Cl.³)**

F 24 H  9/12
         1/20
F 24 D 11/02

**RECHERCHIERTE SACHGEBIETE (Int. Cl.³)**

F 24 H
F 28 D
F 24 J

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 23-04-1982 | VAN GESTEL |

EPA form 1503.1  06.78